# EUROPEAN PATENT APPLICATION

(11) **EP 2 182 674 A1**
(43) Date of publication of application: **05.05.2010**
(21) Application number: 08305750.5
(22) Date of filing: 29.10.2008
(51) Int. Cl.: H04L 12/24, H04L 12/56, H04L 29/08, H04L 12/28

(54) **Method for updating the status of network devices and device implementing the method**

(71) Applicant: Thomson Licensing SA, 92443 Issy-les-Moulineaux Cedex (FR)
(72) Inventor: Dorau, Kai, 30559, Hannover (DE); Kropp, Holger, 30900, Wedemark (DE)
(74) Representative: Lindemann, Robert

(57) **Abstract**

A network device has a network interface circuit for connecting to a second network device. The network interface circuit provides a signal indicating the connection status. The network device is adapted to evaluate the signal indicating the connection status, and is adapted to trigger, in the case of a change of the connection status from disconnected to connected, multicasting or broadcasting of identifier information and/or information about the device type and functionalities and capabilities of the network device, or to trigger, in the case of a change of the connection status from connected to disconnected, multicasting or broadcasting of identifier information specifying the device now disconnected from the interface circuit, to other network devices in the same network.

## Description

The invention relates to a method for updating the status of network devices in a network and a device implementing the method.

### Background of the invention

A network having multi port bridges may not necessarily have a specific bus reset model, such as e.g. the one found in IEEE1394. Consequently adding a network device to a network not having a bus reset model or removing a network device from a network not having a bus reset model may go unnoticed by other network devices that are not in direct physical connection with the added or removed network device. In this case a network device not aware of the removal of another network device could try to communicate with the removed network device, which may cause unnecessary network traffic and block network resources otherwise needed, e.g. during one or more retry periods. On the other hand, if a network device is not aware of a new network device that was added to the network, the functionalities of the newly added network device cannot be properly used.

In order to provide the network devices in a network with information about the status of other network devices connected to the same network, known methods suggest performing a device discovery process in regular time intervals. The term status information is used throughout this specification as describing any kind of information that can be useful or required in operating the network and the devices therein, such as the status of the connection, i.e. connected or not connected, the network address of a network device, information about special functionalities provided by a network device, or other data describing a network device.

Performing device discovery processes at regular time instants and distributing the information amongst all network devices ensures that each device receives updated information about the whole network at the time of the device discovery. Each network device may have a table in which the relevant information is kept, in particular the network address of devices, or routing information. At the time of the device discovery, each network device sends the relevant information to one, several or all other network devices by means of multicast or broadcast.

Typically, the information transmitted for the device discovery process is accompanied by an expiry date or time, indicating the time interval during which the information is believed to be valid after it was sent. After its expiration the information must be updated, e.g. by performing another device discovery process.

If a device has been removed from the network, e.g. by powering it down, or by unplugging it from the network, it usually will not or cannot send corresponding information, in particular in case the device removal was inadvertent or accidentally, and the expired information from a previous device discovery process may be deleted or ignored by the network devices remaining in the network.

A device discovery protocol of the aforementioned type is the Cisco Device Discovery Protocol, or CDP, which is a proprietary layer 2 network protocol developed by Cisco Systems, Inc. Further information about this protocol can be found on the internet, e.g. at Wikipedia. Another known device discovery protocol of this kind is known as LLP, or Link Layer Protocol, as stipulated in IEEE 802.1 AB.

The device discovery procedure may be initiated at fixed or negotiated time instants, either autonomously by each individual device, or by being commanded to do so from a master device, e.g. a bridge device connecting multiple network devices. Of course network access arbitration needs to be respected, in order to avoid multiple devices sending at the same time.

However, running a device discovery process at regular intervals has several drawbacks. The time until a change in the network is discovered and communicated to the other devices of the network depends on the chosen interval time. In the worst case, a change goes unnoticed by most of the network devices for as long as one full interval's time. Further, the regular traffic required for the protocol consumes precious data bandwidth. If changes to the network do not occur very often, or many changes occur concentrated around one time instant followed by larger time periods without changes, this may be a significant waste of resources. However, it is not possible to set a large interval for running the device discovery procedures, because this may result in invalid network information for an unacceptable long time.

### Summary of the invention

It is an object of the invention to provide a network device and a method for updating network devices that improves the recognition of changes in a network not having a dedicated bus reset model.

This object is achieved by the apparatus claim 1 and the claims depending there upon, and by the method claim 5 and the respective dependent claims.

A network device according to the invention has a network interface circuit for connecting to a second network device. The network interface circuit provides a signal indicating the connection status. The connection status includes the status of being connected or disconnected, and may also include further information such as connection speed, maximum allowable packet length, transmission delay of a network segment, or the like. The inventive network device is adapted to evaluate the signal indicating the connection status, and is further adapted to trigger, in the case of a change of the connection status from disconnected to connected, multicasting or broadcasting of identifier information and/or information about the device type and functionalities and capabilities of the network device. Alternatively, in the case of a change of the connection status from connected to disconnected, the inventive network device may be adapted to trigger multicasting or broadcasting of identifier information specifying the device now disconnected from the interface circuit, to other network devices in the same network that remain connected with the respective network device.

The inventive network device need not implement triggering multicast or broadcast status messages upon both events, i.e. connection and disconnection. It is sufficient when each general network device triggers transmission of the status messages upon connection. Bridge devices, however, connecting multiple general network devices, additionally or exclusively implement the function of triggering status messages upon disconnection of a network device. In this way a network system according to the invention can ensure that there is a status message for each kind of change in the connection status.

In accordance with the invention an interface circuit for connecting a first network device to a second network device has at least one output providing at least one signal indicating the link status, or connection status, or a change in the status thereof. It is of course possible that the interface circuit provides two or more signals, e.g. one for each type of status, or change of status, of the connection. The signals generated for indicating the connection status, or the change in the status thereof, may include or be complemented by one or more interrupt signals that are applied to a microprocessor for triggering the evaluation of the connection status and ultimately triggering the transmission of the connection status to other network devices in the network. The interrupt may be replaced by regularly polling the status of the connection within the device, and triggering the transmission upon a detection of a change in the connection status.

As stated above, in the case of the network device being an end terminal having no further connections, providing the signal indicating the status or the change in the status of the connection, and transmitting the status message, are only necessary upon establishing a link.

As also stated above, in the case of the network device being a terminal having further connections, e.g. a switch, a router, a bridge or the like, the features of providing the signal indicating the status or the change in the status of the connection, and transmitting the status message, may be necessary upon detection of a newly established link, e.g. when the network device itself is newly connected, and upon detection of an interruption of a previously existing link or connection to another network device.

The detection of the status of the connection may be performed, for example, by analysing synchronisation signals received. Loss of synchronisation may be determined by analysing symbols or sequences of symbols received at a respective port. Also, loss of connection may be determined when received data does not comply with expected data formats or coding formats. Depending on the network type a lost connection may as well be determined by detecting the absence of a carrier signal. In the case of optical networks detection of the status of the connection may be performed by analysing the strength and/or the frequency of the optical signal. Many other ways of determining the status of a connection are well known to the person of ordinary skill in the art and may be used in conjunction with the inventive method and device.

In the following an exemplary device discovery procedure in an exemplary network having one multiport device and several network devices having only a single port will be described. The exemplary network is arranged in a star topology, in which the multiport network device connects all other devices. The number of network devices attached to the multiport device depends upon the number of ports available in the multiport network device. Further, two or more multiport network devices may be connected, forming one single network or a group of connected subnetworks.

As stated above, each network device has a dynamic device discovery table, in which information about other network devices in the same network are stored. Network devices having only a single port send their device discovery information to the other network devices upon occurrence of a change in the connection status from 'fail' to 'ready', i.e. when they are connected to another network device. The device discovery information is sent as a multicast or broadcast message. As will be explained in greater detail further below, multiport network devices will forward the device discovery information message to other network devices attached thereto. All network devices in the network receiving a device discovery information message respond to this message by adding the information to their respective device discovery table.

Further, the network devices are adapted to send acknowledge messages to the network, after they received a device discovery information message from another device in the network. The acknowledge messages may include a message part that contains information about the functionalities of the acknowledging device.

The network device that had sent the device discovery information message receives the acknowledge messages from the other network devices and updates its own respective device discovery table using the information about the functionalities of the other devices sent in the respective acknowledge messages.

As stated further above, network devices having multiple ports, such as bridges, routers, or switches that are connecting several network devices are transparent for device discovery information messages. In other words, they distribute the multicast or broadcast message originating from a network device that has been newly attached to the network to all other network devices that are attached. However, they are capable of sending device discovery information messages indicating that the connection to a network device that was previously connected is now interrupted. This kind of device discovery information message does not have to include a message part carrying information about functionalities or capabilities of the removed network device. Rather, it serves for informing other network devices that are still connected about a network device that is no longer available. This kind of message may also be referred to as device discovery clear message. The device discovery clear message will be triggered if the link status changes from 'ready' to 'fail'. It will be sent to all network devices connected to the respective multiport device that detected the link failure and may be forwarded to all network devices in the network by other multiport devices.

The device discovery clear message is particularly advantageous in case any of the devices has been disconnected from the network by accident, i.e. without prior notice. In case a network device is capable of informing the other network devices that it will disconnect from the network it may issue the device discovery clear message on its own prior to disconnecting. However, if the network device is not or no longer capable of sending a device discovery clear message, for example due to power failure or an unexpected interruption of the network cable the multiport network device to which the disconnected device was previously connected will perform the task of informing the devices remaining in the network.

Upon receiving a device discovery clear message a network device will cancel the corresponding entry in its device discovery table.

The invention advantageously allows for very quickly performing a device discovery sequence due to being interrupt-triggered, and avoids regular polling of interfaces for determining the status of the connection. As the device discovery sequence is only triggered by specific events like connection or disconnection the network traffic is reduced, and the device discovery tables of all network devices within the network are synchronised almost simultaneously. Further, in an IP based network the device discovery protocol may be implemented using the IP protocol structure, advantageously allowing for distributing device discovery information messages even across boundaries of subnetworks within the network.

In this specification the terms 'fail' and 'ready' are used for indicating the status 'disconnected' and 'connected' of a network connection. It goes without saying that other terms may be used in actual implementations, and that further status of the connection may be added, upon which a status message may be issued, that are still within the scope of the invention.

### Brief description of the drawings

In the following section the invention will be described in greater detail with reference to the drawing, in which
Figure 1 shows a schematic block diagram of an exemplary network device according to the invention that is connected to only one further network device; and
Figure 2 shows a schematic block diagram of an exemplary network device according to the invention that is connected to multiple further network devices.

### Detailed description of preferred embodiments

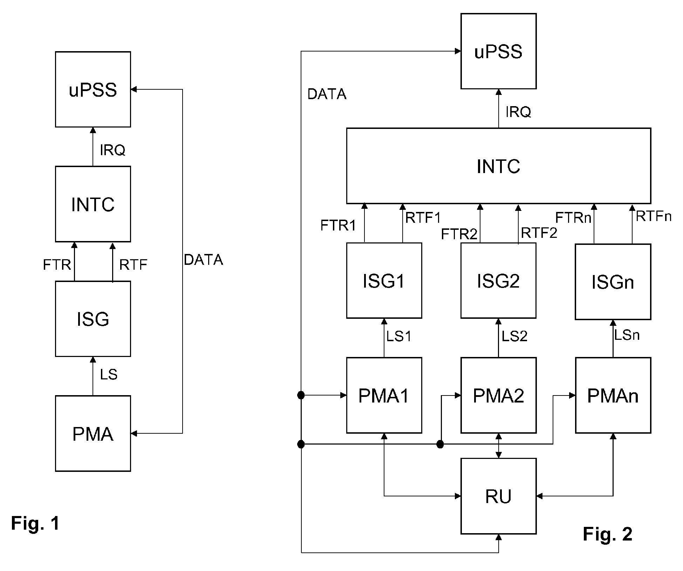

Figure 1 shows a schematic block diagram of an exemplary network device in accordance with the invention that is connected to only one further network device. The exemplary network device provides a connection in accordance with the IEEE 802.3 standard, widely known as Ethernet. In IEEE 802.3 the access of devices to the network is controlled in accordance with CSMA/CD, an acronym for Carrier Sense Multiple Access/Collision Detection, in a time multiplex manner. IEEE 802.3 does not have a standardised physical bus reset model, like e.g. IEEE 1394. In IEEE 802.3 a network device sends, from time to time, network management functionalities for device discovery to the network. No time intervals for this device discovery are stipulated in the standard, and the time intervals may vary for individual devices. Consequently, a considerable time may pass before the network devices connected to the network have information about each and every device in the network.

The network connection of the inventive network device shown in figure 1 is represented by a physical medium attachment PMA that provides a link status signal LS. The term physical medium attachment refers to the actual physical interface of the network device, e.g. an electrical or optical connector receptacle and circuitry for transmitting and receiving signals. The actual implementation of the network connection may include other components which are not shown in the figure for clarity reasons. The link status signal LS allows for determining whether or not another network device is currently connected to the interface, and whether or not the other network device can send and/or receive data. The link status signal LS may represent the parameters fail, i.e. no connection to other network device, or ready, i.e. connection to other network device established. The link status signal LS is supplied to an interrupt signal generator ISG, which outputs two interrupt signals RTF, FTR. The interrupt signal RTF signals a change in the connection status from 'ready' to 'fail' and the interrupt signal FTR signals a change in the connection status from 'fail' to 'ready'. It goes without saying that other interrupt signals may be generated depending upon the requirements and capabilities of the network and the network devices.

The interrupt signals RTF, FTR are connected to an interrupt controller INTC, which controls the processing of a microprocessor subsystem uPSS in accordance with the type of the interrupt and a program stored in the microprocessor subsystem. The aforementioned control is triggered via an interrupt request signal IRQ in a commonly known manner. Other interrupt signals, not shown, may also be supplied to the interrupt controller INTC and cause control of corresponding processes. Also, several interrupt signals related to a single connection port may be provided to the microprocessor for triggering individual processes adapted to the respective events. The general handling of interrupts and the various ways of reacting to interrupt signals are well known in the art and will not be discussed in detail.

In the case of an interrupt RTF, FTR signalled to the microprocessor uPSS the microprocessor triggers a device discovery sequence. The device discovery sequence, as stated further above, includes sending status and other information about the network device to other devices in the network. In the case of a network device that is only connected to one further network device, an interrupt of the RTF type, indicating an interruption of a previously established connection, may simply cause updating of an internal table holding information about other network devices which were previously accessible via the network, e.g. by deleting the table's content. An interrupt of the FTR type may for example cause triggering the action of multicasting or broadcasting the device's capabilities and other information to other devices in the network.

The microprocessor subsystem uPSS is further connected to the physical medium attachment PMA by a data connection DATA, via which the microprocessor subsystem sends data to and receives data from the network, when attached.

Figure 2 shows a schematic block diagram of an exemplary network device according to the invention that is connected to multiple further network devices. Network devices of this kind in the IEEE 802.3 environment are for example routers, switches or bridges, or generally spoken multiport network devices.

The multiport network device has n connections to the network, represented by the physical media attachment PMA1, PMA2, PMAn. Each one of the physical media attachments PMA1, PMA2, PMAn generates a link status signal LS1, LS2, LSn in the same manner as described under figure 1 further above. Each one of the link status signals LS1, LS2, LSn is connected to a respective interrupt signal generator ISG1, ISG2, ISGn, which generate and output interrupt signals FTR1, RTF1, FTR2, RTF2, FTRn, RTFn in the same manner as described under figure 1 further above.

As described under figure 1 for the single port network device, the interrupt signals FTR1, RTF1, FTR2, RTF2, FTRn, RTFn of the multiport device are connected to an interrupt controller INTC, which controls the processing of a microprocessor subsystem uPSS in accordance with the type of the interrupt and a program stored in the microprocessor subsystem. The aforementioned control is triggered via an interrupt request signal IRQ in a commonly known manner. Other interrupt signals, not shown, may also be supplied to the interrupt controller INTC and cause control of corresponding processes.

The interrupt controller INTC of the multiport device expediently has a number of inputs that corresponds to the number of ports of the multiport device. In this way the microprocessor can react to a change in the link status within the interrupt latency time. The quick reaction time typical to interrupt controlled systems is advantageous over a system involving polling at regular time intervals.

In the exemplary multiport network device the microprocessor subsystem uPSS sends and receives data via a connection DATA to each physical media attachment PMA. The connection DATA may be a bus connection or comprise individual data lines.

Further, the exemplary multiport network device shown in figure 2 is provided with a relay unit RU, which controls exchange of data traffic between two or more physical media attachments PMA and performs relaying data between two or more ports. The microprocessor subsystem uPSS is connected to the relay unit RU via the connection DATA and may control the relay unit RU.

The microprocessor subsystem, the interrupt signal generator, the relay unit and the interrupt controller may be implemented as dedicated hardware, e.g. an ASIC, an FPGA, or any other suitable logic hardware, or may be implemented as a general purpose microcontroller or microprocessor running an according software program. The dedicated hardware may include clocked and non-clocked type circuits or state-machines.

## Claims

1. Network device having a network interface circuit for connecting to a second network device, wherein the network interface circuit provides a signal indicating the connection status, wherein the connection status includes connected or disconnected, wherein the network device is adapted to evaluate the signal indicating the connection status, and wherein the network device is adapted to trigger, in the case of a change of the connection status from disconnected to connected, multicasting or broadcasting of identifier information and/or information about the device type and functionalities and capabilities of the network device, or to trigger, in the case of a change of the connection status from connected to disconnected, multicasting or broadcasting of identifier information specifying the device now disconnected from the interface circuit, to other network devices in the same network.

2. Network device according to claim 1, wherein evaluation of a change in the status of the signal indicating the connection status includes generation of an interrupt signal.

3. Network device according to claim 1 or 2, having a table, the table holding information about devices connected to the same network and their functionalities and capabilities, and wherein the broadcast or multicast information is used to update the table.

4. Network device according to any one of claims 1 to 3, wherein the network device is a multiport bridge device or a multimedia enabled device.

5. Method for updating at least one further network device in a network about the status of a first network device in the same network including the steps of:
- the first network device monitoring the status of a network interface circuit for a change in the connection status thereof from not connected to connected and, in the case of such a change in the status, the first network device multicasting or broadcasting identifier information for identifying the first network device or properties or capabilities or functionalities thereof to at least one further network device in the same network; or including the steps of:
- monitoring, by one of the at least one further network devices, which is physically connected to the first network device, the status of an interface circuit for a change in the connection status thereof from connected to not connected and, in the case of such a change in the status, multicasting or broadcasting identifier information of the disconnected first device to multiple or all network devices in the same network.

6. Method according to claim 5, wherein the status of the network device includes information about the device being connected or not connected, capabilities of the device, or functionalities of the device.

7. Method according to claim 5 or 6, further including generating of an interrupt signal upon occurrence of a change in the network connection for triggering multicasting or broadcasting of the status message.

8. Network system having at least two network devices according to one of claims 1 to 4.
